# EUROPÄISCHE PATENTSCHRIFT

(11) **EP 1 015 972 B1**
(45) Veröffentlichungstag und Bekanntmachung des Hinweises auf die Patenterteilung: **17.10.2001**
(21) Anmeldenummer: 98947301.2
(22) Anmeldetag: 17.07.1998
(51) Int. Cl.: G06F 9/46, G06F 9/445

(54) **VERFAHREN ZUR VERMITTLUNG VON TRANSAKTIONSSCHRITTEN**
METHOD FOR SWITCHING TRANSACTION STEPS
PROCEDE DE COMMUTATION D'ETAPES DE TRANSACTIONS

(30) Priorität: 24.09.1997 DE 19742149
(43) Veröffentlichungstag der Anmeldung: 05.07.2000
(73) Patentinhaber: Wincor Nixdorf GmbH & Co KG, 33106 Paderborn (DE)
(72) Erfinder: GRUPE, Frank, D-33649 Bielefeld (DE)
(86) Internationale Anmeldenummer: DE9802018
(87) Internationale Veröffentlichungsnummer: WO9915961

(56) Entgegenhaltungen:
- EP-A- 0 144 792
- EP-A- 0 490 595
- WO-A-95/17721

## Beschreibung

Die Erfindung betrifft ein Betriebsverfahren für datenverarbeitende Geräte, insbesondere solche, bei denen ein Klient mit transienten Programmen auf lokale Transaktionsleistungen zugreift.

Viele Einrichtungen und Automaten, hier insbesondere Geldausgabe-Automaten, Service- und Auskunftsstationen, sowie Buchungsautomaten, enthalten eine Datenverarbeitungsanlage zur Steuerung und stellen damit ein Datenverarbeitungsgerät dar. Vielfach wird, entsprechend der verfügbaren Computertechnik und -Leistung, dieses aus einer handelsüblichen universellen Anlage wie einem PersonalComputer oder Arbeitsgruppen-Server abgeleitet und verwendet dessen Betriebssystem. Für die Bedienoberfläche stehen Bildschirme mit den heutigen graphischen Möglichkeiten zur Verfügung. Die Darstellung der Information erfolgt bevorzugt durch einen als "browser" bezeichneten Interpreter für insbesondere die Dokumentenbeschreibungssprache HTML (T. Berners-Lee, D. Connolly: Hypertext Markup Language. RFC 1866, Nov. 1995).

Neuere Versionen und Varianten von HTML sehen die Einbettung von kurzen Programmen vor, die als "applets" bezeichnet werden und die im folgenden als Teilprogramme bezeichnet werden. Hierfür sind die von der Firma Sun Microsystems entwickelte Sprache JAVA, die daraus abgeleitete Teilmenge JAVASCRIPT, als ECMA-Script im Standard ECMA-262 (Juni 1997) veröffentlicht, und die von der Firma Microsoft entwickelte Schnittstelle "ActiveX" bekannt. Derartige Teilprogramme können grundsätzlich auf Leistungen des Betriebssystems bzw. ihrer Umgebung, des HTML-Interpreters, zugreifen. Sie dienen insbesondere dazu, Funktionen und Abläufe bereitzustellen, die von der Sprache HTML nicht vorgesehen sind.

Hierzu gehören insbesondere die Abwicklung von Transaktionen mit bzw. der Zugriff auf Betriebsmittel von der Datenstation, auf der die HTML-Seiten angezeigt werden. Zu diesen Betriebsmitteln gehören Chipkartenleser, Datenfernverarbeitungsverbindungen mit verschiedenen Protokollen oder Belegdrucker. Wie nahezu alle Betriebsmittel dieser Art werden sie über eine verbindungsorientierte Schnittstelle betrieben, bei der zunächst durch OPEN die Kommunikation mit dem Betriebsmittel eröffnet wird, sodann durch eine Reihe von READ, WRITE oder IOCTL Befehlen die Verarbeitung erfolgt und die Verbindung durch CLOSE getrennt wird. Teilprogramme wie JAVA Applets oder ActiveX Controls stellen diese Möglichkeiten auch zur Verfügung.

Da jedoch ein Teilprogramm immer nur solange aktiv ist, wie die Seite angezeigt wird, können Teilprogramme verschiedener Seiten oder aufeinanderfolgende Aufrufe von Teilprogrammen nicht miteinander kommunizieren. Außerdem ist die Abfolge der Teilprogramme, da durch das Benutzerverhalten bestimmt, nicht vorbestimmt. Dies bedeutet, daß jedes Teilprogramm immer zunächst mit OPEN das Betriebsmittel öffnen muß, um zugreifen zu können. Dies bedeutet jedoch einen erheblichen Zeitverlust, da die Eröffnung einer Verbindung mit OPEN zugunsten einer schnellen Verarbeitung mit READ/WRITE relativ langsam und aufwendig ist. Dies macht sich dann durch lange Wartezeiten für den Aufbau einer Seite bemerkbar, die den Nutzen dieses Lösungsweges über HTML-Interpreter und Teilprogramme erheblich relativieren.

Aufgabe der Erfindung ist es daher, eine Lösung anzugeben, mit der Teilprogramme schnell auf verbindungsorientierte Betriebsmittel zugreifen können, ohne selbst eine Verbindung eröffnen zu müssen; eingeschlossen eine schnelle Abwicklung von Transaktionen beliebiger Art.

Die Lösung dieser Aufgabe benutzt die Erkenntnis, daß die Teilprogramme optimal mit einer Datagramm-Schnittstelle arbeiten, aber die Betriebsmittel einer verbindungsorientierte Schnittstelle bedürfen. Daher wird ein Vermittlerprogramm oder -prozeß verwendet, der seitens der Teilprogramme über eine Datagramm-Schnittstelle verfügt und seinerseits die verbindungsorientierte Schnittstelle bedient. Damit kann der Vermittlerprozess die zeitraubende Eröffnung eines Betriebsmittels einmalig bei seinem Start durchführen und die über die Datagramm-Schnittstelle erhaltenen Aufträge sehr schnell ausführen.

Es handelt sich also um ein Verfahren zum Betrieb einer Datenstation mit einer Benutzerschnittstelle zum Laden und Ausführen von Teilprogrammen, wobei das Betriebssystem Betriebsmittel über eine Schnittstelle für verbindungsorientierten Betrieb bereitstellt und ein ständig aktives Vermittlerprogramm von den Teilprogrammen Aufträge zur Bedienung der Betriebsmittel über eine Datagramm-Schnittstelle erhält.

Die folgende Beschreibung, die auch Varianten und Weiterbildungen aufführt, verwendet zwei Arten von Kommunikation zwischen Programmen oder Prozessen, nämlich die datagrammatische und die verbindungsorientierte.

Überwiegend werden verbindungsorientierte Kommmunikatiionsmittel verwendet. Hierzu gehören ältere analoge, wie Telefon oder Telefax, oder neuere digitale, wie ISDN oder TCP/IP. In allen Fällen wird durch einen Wählprozeß eine Assoziation zwischen einem Anrufer und einem Angerufenen hergestellt, der eine gewisse Zeit in Anspruch nimmt. Danach sind Betriebsmittel reserviert und ist ein tatsächlicher oder scheinbarer Kommunikationskanal vorhanden, über den die Partner Nachrichten ohne Verzögerung, verglichen mit der Zeit für den Wählvorgang, austauschen können, weil die Betriebsmittel bereits zugeordnet sind (und auch als Leistung abgerechnet werden). Diese Verbindungen garantieren zwar keine sofortige Ablieferung, aber immer eine Ablieferung der Daten in der Reihenfolge, in der sie abgesendet wurden.

Im Gegensatz hierzu wird eine als Datagramm-Protokoll bezeichnete Kommunikationsmethode relativ selten explitz verwendet, bei der Daten in kleinen Einheiten autonom, d.h. ohne Korrelation aufeinanderfolgender Sendungen, übermittelt und abgeliefert werden. Das Internet-Protokoll IP arbeitet auf diese Art und stellt für Anwendungen das Protokoll UDP/IP zur Verfügung. Der Vorteile dieses Protokolls liegt in dem geringen Aufwand, weil kein Auf- oder Abbau einer Verbindung erfolgt. Wenn überhaupt nur ein oder wenige Datenpakte zu verschicken sind, ist ein Datagramm-Protokoll erheblich effizienter als ein verbindungsorientiertes. Dies selbst dann, wenn der Empfänger einer Nachricht diese aktiv durch ein weiteres Datagramm quittieren muß. Das IP-Protokoll nutzt die Datagramm-Übermittlung zur Sicherung gegen Netzstörungen, da für jedes Datagramm neu entschieden werden kann, auf welchem Weg es übertragen wird. Das Protokoll TCP/IP realisiert ein verbindungsorientiertes Protokoll mittels eines Datagramm-Protokolls, realisiert also im Gegensatz zu der vorliegende Erfindung eine verbindungsorientierte Kommunikation mittels einer Datagramm-Kommunikation.

Vom Prinzip her stellen die üblichen Schnittstellen zur Dateiverarbeitung in einem Betriebssystem auch ein verbindungsorientiertes Protokoll dar, indem eine Verarbeitung durch OPEN eröffnet und durch CLOSE geschlossen wird und dazwischen eine Anzahl von READ oder WRITE möglich ist. Dies erkennt man auch daran, daß der INET-Dämon in einem POSIX-Betriebssystem Dienste, die mit dem verbindungsorientierten Protokoll TCP/IP arbeiten, aufruft, indem die Standard-Ein- und Ausgabe statt auf Dateien auf die Kommunikationsverbindungen umgeleitet werden und es für das Programm nicht prinzipiell unterschiedlich ist, ob es lokal oder als Netzanwendung arbeitet.

Gemeinsame Speicherbereiche ('shared memory') stellen strukturell einen Datagramm-Dienst bereit, sobald durch Semaphore eine Serialisierung des Zugriffs erreicht wird. Mehrere Prozesse können unkorreliert Nachrichten ablegen, ohne daß hierzu die Gegenstelle aktiv werden muß. Im folgenden wird daher allgemein von Datagramm-Dienst gesproche und eine Implementation über gemeinsamen Speicher eingeschlossen.

Eine weitere Kommunikationsmethode, auch als 'named pipes' bekannt, könnte als "benannten Kanälen" bezeichnet werden. Sie haben eine Sonderstellung insofern, als sie zwar strukturell ein verbindungsorientierter Dienst sind, aber leicht auch für Datagramme verwendet werden können. So ist es beispielsweise bekannt, daß ein Hintergrundprozess über eine 'named pipe' Kommandos empfängt und die 'named pipe' hierzu einmal öffnet und sodann auf Kommandos wartet. Diese Kommandos sind jedoch selbständig und können in nicht vorherbestimmter Reihenfolge und Art und von einer gleichfalls nicht vorbestimmten Anzahl und Art von Absendern kommen, die jeweils durch die Sequenz 'OPEN-WRITE-CLOSE' die 'named pipe' benutzen. Der OPEN-Vorgang für eine 'named pipe' ist dabei sehr schnell, da keine Peripheriegeräte betroffen sind. Wenn der Empfänger der 'named pipe' also jede Datenmenge als autonomen Auftrag auffaßt, dann stellen 'named pipes' eine Alternative zu anderen Datagramm-Methoden dar.

Wie bereits erwähnt, sind die Teilprogramme einer HTML-Seite kurze Programme von recht flüchtiger Existenz, die nur für die Dauer der Aktivierung einer HTML-Seite aktiviert werden. Daher ist ein Datagramm-Dienst für die Steuerung von lokal vorhandener Peripherie erheblich besser geeignet als ein Verbindung, die erst aufgebaut und dann wieder abgebaut werden muß, obwohl nur einmalig eine sehr kleine Nachricht verschickt werden muß.

Ist diese Sachlage erkannt, dann ist eine Lösung dadurch erreichbar, daß ein Vermittler das gewünschte Datagramm-Protokoll auf die vorhandenen Vermittlungs-Protokolle abbildet.

In der bevorzugten Ausführungsform ist der Vermittler ein selbständiger Prozeß, der in bekannter Art beim Systemstart gestartet wird. Wird als Datagramm-Schnittstelle UDP/IP verwendet, so kann auch ein Starten 'on-demand' durch den bekannten inet-Dämon erfolgen.

Transaktionen sind insofern verbindungorientierten Betriebsmitteln gleichzusetzen, als eine Transaktion eröffnet, in Schritten durchgeführt und dann entweder abgebrochen oder vollendet wird. Ein Teilprogramm müßte auch hier sich zunächst bei einem Transaktionsprogramm anmelden, die Transaktion eröffnen, den Transaktionsschritt anmelden, die Transaktion bestätigen und die Verbindung schließen. Der erfindungsgemäße Vermittler öffnet die Verbindung nur einmal und erhält von dem Teilprogramm lediglich die Daten für den Transaktionsschritt, die anderen Schritte sind fest im Vermittler vorgesehen. Zwar ist diese Lösung nur für einfache Transaktionen sinnvoll; diese haben jedoch einen großen Anteil an den gesamten Transaktionen, so daß deren Beschleunigung wirksam ist.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

Es zeigen
- Fig. 1: ein Blockschaltbild der beteiligten Komponenten und
- Fig. 2: ein Schema für den zeitlichen Ablauf nach der Erfindung.

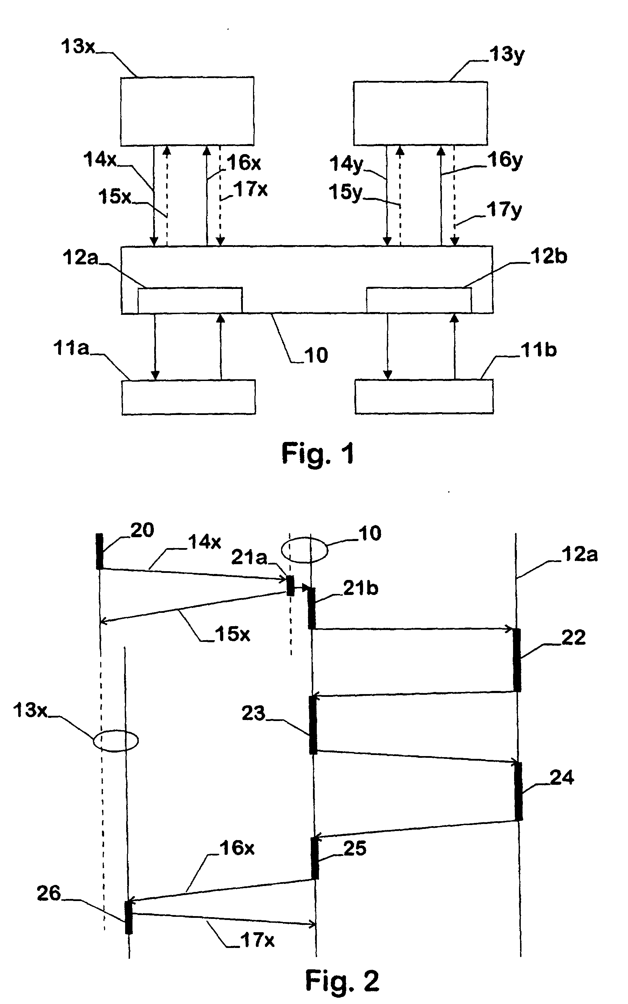

In Fig. 1 ist symbolisch ein Blockschaltbild der in der Erfindung betroffenen Komponenten dargestellt. Das Vermittlerprogramm 10, im folgenden kurz als 'der Vermittler' bezeichnet, wird vorzugsweise während des Startens des gesamten Systems gestartet. Mehrere Betriebsmittel 11a, 11b wie Chipkartenleser, verbindungsorientiere Datenfernverbindungen, beispielsweise nach X25 oder im SNA-Netzwerksystem, oder Belegdrucker werden über eine Schnittstelle 12a, 12b betrieben. Diese Schnittstelle wird häufig vom Betriebsysteme bereitgestellt und verbindungsorientiert durch Befehle wie OPEN, READ/WRITE/CNTL und CLOSE behandelt. Selbst wenn die Schnittstelle nicht Teil des Betriebssytems ist, wird üblicherweise eine Schnittstelle als Modul geschaffen, welche sich weitgehend ähnlich wie eine Betriebssystem-Schnittstelle verhält.

Der Vermittler 10 liest aus einer (nicht dargestellten) Konfigurationsdatei Bezeichnungen für die zu bedienenden Schnittstellen 12a, 12b und versucht, diese zu eröffnen. Eine Fehlerbehandlung erfolgt in üblicher Art und ist nicht Gegenstand dieser Erfindung. Im folgenden wird davon ausgegangen, daß die Betriebsmittel eröffnet und verfügbar sind. Die Anzahl der Betriebsmittel ist selbstverständlich beliebig zwischen eins und der Menge der überhaupt in dem Datenverarbeitungsgerät vorhandenen Betriebsmittel, soweit sie nicht von anderen Komponenten exklusiv benutzt sind.

Weiterhin stellt der Vermittler 10 Mittel bereit, mit denen er über Datagramme erreichbar ist, wie im folgenden angenommen wird. Dabei kann das verwendete Datagramm-Protokoll in Parameterdateien oder einer Registrierungsdatenbank abgelegt sein, so daß es nicht in den Teilprogrammen fest enthalten sein muß, sofern diese auf solche Mittel zugreifen können. Gleiches gilt für die darüber verfügbaren Betriebsmittel.

Im Verlaufe des Betriebs des Datenverarbeitungsgeräts werden Teilprogramme 13x, 13y geladen und aktiviert. Während das Vermittlerprogramm 10 mit den Betriebsmitteln 11a, 11b statisch vorhanden ist, stehen die Teilprogramme 13x, 13y nur vorübergehend an und in der Regel auch nicht gleichzeitig vorhanden. Die in Fig. 1 dargestellten zwei Teilprogramm stehen daher nun symbolisch für eine beliebige, durch das Verhaltend des Benutzers aktivierte, Anzahl und Art von Teilprogrammen, die zeitlich beliebig überlappend aufeinanderfolgen können.

Im folgenden bezieht sich die Beschreibung auf das Teilprogramm 13x mit den Kommunikationsschritten 14x, 15x, 16x und 17x; diese gilt gleichermaßen für das Teilprogramm 13y mit den Kommunikationsschritten 14y, 15y, 16y und 17y.

Das Teilprogramm 13x, welches eines der Betriebsmittel 11a, 11b zu verwenden wünscht, erstellt einen Auftragssteuerblock (nicht dargestellt) und sendet diesen über die vereinbarte Datagramm-Schnittstelle als Nachricht 14x an das Vermittlerprogramm. Schematisch und vereinfacht sieht das so aus:
procedure ReqAct;
struct TReqAct thisReq
thisReq.Op = 'r'
thisReq.dev = '11b'
...
rc = subDgram('10', thisReq)

Es wird ein Steuerblock 'thisReq' aufgebaut und die Befehlsangabe 'Op' sowie das gewünschte Betriebsmittel 11b im Feld 'dev' angegeben; weitere Angaben im Steuerblock hängen in der Regel von dem Betriebsmittel ab und werden in bekannte Art ähnlich beispielsweise einem READ-Befehl für das Betriebsmittel 11b ausgefüllt. Der Steuerblock kann dazu Varianten umfassen, was einem Programmierer von beispielsweise PASCAL oder C bekannt ist. Sodann wird durch den Aufruf 'subDgram' der Steuerblock 'thisReq' an den Vermittler 10 geschickt; als Ergebnis wird ein Code 'rc' abgeliefert.

In dem Vermittler 10, welcher vorzugsweise die Möglichkeiten mehrerer Kontrollflüsse durch 'threads' ausnutzt, ist eine Komponente zum Empfang enthalten. Dies geschieht durch Mittel des Betriebssystems dadurch, daß eine Prozedur als Empfänger registriert ist und bei Eintreffen einer Nachricht aktiviert wird. Diese Prozedur erzeugt einen neuen Kontrollfluss ('thread') für die Bearbeitung des Auftrags und sendet eine Quittung 15x zurück, welche als Code 'rc' in dem Teilprogramm 13x empfangen und analysiert wird. Dieser Code kann in bekannter Weise angeben, ob der Auftrag angenommen wurde oder aus welchen Gründen dieser abgewiesen werden mußte.

Spätestens wenn der Auftrag angenommen ist, muß das Teilprogramm einen Programmcode angeben der , z.B. als Unterprogramm, eine Nachricht von dem Vermittler entgegennehmen soll. Dies erfolgt aus Synchronisationsgründen zweckmäßig unmittelbar vorher. Diese Funktion ist Teil des 'host environment' und daher nicht in der genannten ECMA-262 beschrieben, sondern der Dokumentation der jeweiligen, das Teilprogramm aufrufenden Komponente zu entnehmen. Die Dokumentation zu der Komponente NETSCAPE beispielsweise ist unter 'http://home.netscape.com/eng/mozilla/3.0/handbook /javascript/index.html' abrufbar. Entsprechen der Zuordnung eines Ereignisses zu einem JavaScript-Statement durch die Funktion 'onReset' wird einer Nachricht 16x von dem Vermittler 10 ein Java-Script-Statement zugeordnet.

Dem bekannten Ereignis 'reset' wird beispielsweise durch den Aufruf von 'onReset' wie folgt ein Unterprogramm 'alert' zugeordnet:

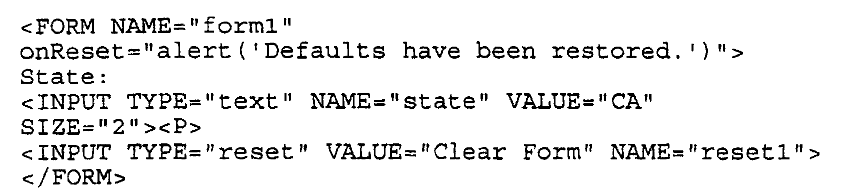

In gleicher Art kann dem Ereignis "Nachricht vom Vermittler 10" durch 'onMsg(10)' ein Unterprogramm zugeordnet werden:

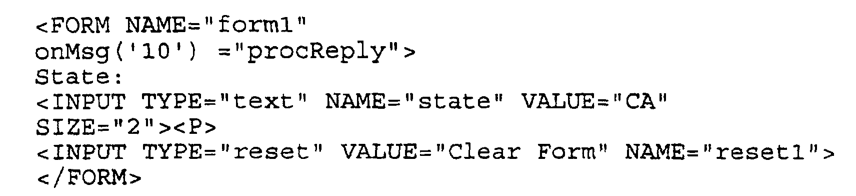

Dabei ist bei dem Funktionsnamen 'procReply' kein Parameter angegeben, weil beim Aufruf ein Verweis auf eine passende Struktur für das übermittelte Datenpaket als Parameter übergeben wird. Als weiterer Parameter könnte auch ein Code für den Vermittler und für das Format des Datenpakets angegeben sein. Diese Funktion ist noch nicht in der bekannten Umgebung für den oben angegebenen NETSCAPE-Interpreter vorhanden und muß dort noch eingeführt werden, wenn genau dieser Verwendung finden soll.

Das Datenpaket enthält die von dem Betriebsmittel erlangten Daten, beispielsweise die Nummer der eingelegten Chipkarte. In dem Vermittler wird, nachdem die Operations, hier READ auf eine Chipkarte, beendet ist und die Daten vorliegen, eine Nachricht aufgebaut und an das Teilprogramm verschickt. Dadurch wird demnach das mit der Nachricht verbundene Programmteil, in dem Beispiel die Prozedur 'procReply', aufgerufen und erhält über eine vereinbarte Datenstruktur die Daten.

Die geschilderte Vorgehensweise unter Ausnutzung der Parallelarbeit durch 'threads' und 'events' entspricht den Möglichkeiten aktueller Betriebssysteme. Eine Anwendung ohne deren Ausnutzung ist jedoch gleichfalls möglich, indem die Rückmeldung auf den Auftrag bereits das Ergebnis und nicht nur einen Code der Art "Auftrag angenommen" enthält. Durch diesen synchronen Aufruf, beispielsweise durch einen 'remote procedure call', RPC, der besonders einfach in jede existierende Programmiersprache, also auch JAVA, JavaScript oder ActiveX einbringbar ist, wartet das Teilprogramm auf die Ausführung des Auftrags.

In der Beschreibung ist ferner angenommen, daß die Datagramm-Schnittstelle einen Ergebniscode liefert. Ist ein solcher nicht vorgesehen, z.B. bei dem Protokoll UDP/IP, so kann einerseits die Rücksendung eines solchen vereinbart werden. Genausogut kann das Teilprogramm auf die Antwort mit den Daten einfach warten und sich einen Zeitgeber setzen, z.B. über die JavaScript-Funktion 'setTime-Out', und bei Ablauf die Anfrage als gescheitert ansehen.

In Fig. 2 sind die genannten Abläufe noch einmal in zeitlichem Zusammenhang dargestellt. Da die Teilprogramme in z.B. JavaScript vorzugsweise ereignisorientiert programmiert sind, sind zwei Ausführungspfade für das Teilprogramm 13x und den Vermittler 10 dargestellt.

Zunächst wird in einem ersten Teil 20 ein Auftrag 14x an den Vermittler 10 geschickt und in dem zweiten Teil 21a behandelt. Dort wird ein neuer Ausführungspfad 21b angestoßen und eine Quittung zurückgegeben. Der neue Ausführungspfad 21b stellt einen Auftrag an das Betriebsmittel und wartet bis zu dessen Rückmeldung. Dieser Auftrag wird dort in einem dritten Teil 22 bearbeitet und sodann, synchron im Sinne einer verbindungsorientierten Steuerung, in einem vierten Teil 23 im Vermittler weiterbehandelt. In dem Beispiel wird angenommen, daß ein fünfter Teil 24 in der Steuerung für das Betriebsmittel 12a notwendig ist, nach dessen Ende nunmehr der Vorgang abgeschlossen sei, so daß der sechste Teil 25 das oder die Resultate 16x zurückschickt und seinerseits eine Quittung von dem siebten Teil 26 im Vermittler erhält.

Die bisherige Beschreibung ging davon aus, daß die Schnittstelle 12a zu einem Betriebsmittel bei Start des Vermittlers 10 geöffnet und erste bei Ende geschlossen wird. Da dies den Start verzögert, kann in bekannter Art die Schnittstelle bei der ersten Anfrage geöffnet, aber dann bei Erledigung derselben noch nicht geschlossen werden. Ist die Anzahl der gleichzeitig geöffnet haltbaren Schnittstellen klein, kann selbstverständlich auch durch eine 'least recently used'-Strategie bei Bedarf die am längsten nicht benutzte Schnittstelle geschlossen und bei Bedarf wieder eröffnet werden. Wenn es aus der Abfolge der Teilprogramme erkennbar zunächst keine weitere Benutzung eines Betriebsmittels zu erwarten ist, kann auch ein Hinweis zum Schließen der Schnittstelle vorgesehen werden. Ob der Vermittler dies sofort, verzögert oder überhaupt nicht ausführt, ist in dessen Belieben gestellt und kann z.B. von mitgeführten Benutzungsstatistiken abhängig sein.

## Patentansprüche

1. Verfahren zum Betrieb eines Datenverarbeitungsgeräts mit den Merkmalen:
- eine Benutzerschnittstelle umfaßt Mittel zum Laden und Ausführen von Teilprogrammen (13x, 13y) durch Aktivierung von Elementen der Benutzerschnittstelle,
- ein Betriebssystem stellt mindestens ein Betriebsmittel (11a, 11b) bereit, das nicht von der Benutzerschnittstelle verwaltet wird und dessen Schnittstelle (12a, 12b) verbindungsorientierten Betrieb vorsieht,
- ein Vermittler (10) erhält von Teilprogrammen (13x, 13y) Aufträge (14x, 14y) zur Bedienung von Betriebsmitteln (11a, 11b), deren Schnittstelle (12a, 12b) verbindungsorientierten Betrieb vorsieht, wobei die Aufträge (14x, 14y) über eine verbindungslose Schnittstelle übermittelt werden.

2. Verfahren nach Anspruch 1, wobei der Vermittler die Verbindung zu einem Betriebsmittel mit dem Eintreffen eines auf das Betriebsmittel bezogenen Auftrags eröffnet.

3. Verfahren nach Anspruch 1, wobei der Vermittler die Verbindung zu einem Betriebsmittel unmittelbar nach Betriebsbeginn und vor dem Eintreffen eines bezogenen Auftrags eröffnet.

4. Verfahren nach Anspruch 2 oder 3, wobei ein Auftrag vorgesehen ist, der die Verbindung zu dem bezogenen Betriebsmittel schließt.

5. Verfahren nach Anspruch 4, wobei das Schließen von mitgeführten Benutzungsstatistiken abhängig ist.

6. Verfahren nach einem der vorhergehenden Ansprüche, wobei der Vermittler für jedes bedienbare Betriebsmittel einen Zustand mitführt und über die Datagramm-Schnittstelle sowohl den Zustand als auch die zulässigen Folgezustände bzw. die zulässigen Aufträge abfragbar macht.

7. Verfahren nach einem der vorhergehenden Ansprüche, wobei der Vermittler die Datagramm-Schnittstelle über eine Registrier-Datenbank bekanntgibt.

8. Verfahren nach Anspruch 7, wobei der Vermittler in der Registrier-Datenbank die bedienbaren Betriebsmittel bekanntgibt.

9. Verfahren nach einem der vorhergehenden Ansprüche, wobei die Benutzerschnittstelle eine 'Hyper-Text Markup Language' verwendet.

10. Verfahren nach einem der vorhergehenden Ansprüche, wobei die Datenstation an ein Netzwerk angeschlossen ist und Teilprogramme über das Netzwerk übermittelt werden.

11. Verfahren nach einem der Ansprüche 1 bis 10, wobei als Datagramm-Schnittstelle gemeinsamer Speicher ('shared memory') verwendet wird.

12. Verfahren nach einem der Ansprüche 1 bis 10, wobei als Datagramm-Schnittstelle benannte Kanäle ('named pipes') verwendet werden.

13. Verfahren nach einem der Ansprüche 1 bis 10, wobei als Datagramm-Schnittstelle das Protokoll UDP/IP verwendet wird.

## Claims

1. Method for operating a data-processing unit having the features:
- a user interface comprises a means for loading and executing program elements (13x, 13y) by activating elements of the user interface,
- an operating system makes available at least one resource (11a, 11b) which is not administered by the user interface and whose interface (12a, 12b) provides connection-oriented operation,
- a switcher (10) receives from program elements (13x, 13y) jobs (14x, 14y) for the operation of resources (11a, 11b) whose interface (12a, 12b) provides connection-oriented operation, the jobs (14x, 14y) being transferred via a connectionless interface.

2. Method according to Claim 1, the switcher opening the connection to a resource when a job which relates to the resource is received.

3. Method according to Claim 1, the switcher opening the connection to a resource directly after the start of operation and before a related job is received.

4. Method according to Claim 2 or 3, a job being provided which closes the connection to the related resource.

5. Method according to Claim 4, the closure being dependent on use statistics which are registered simultaneously.

6. Method as claimed in one of the preceding claims, the switcher registering simultaneously a status for each resource which can be operated, and enabling both the status and the principle consequent states and/or the permissible jobs to be interrogated via the datagram interface.

7. Method according to one of the preceding claims, the switcher indicating via a recording data base the datagram interface.

8. Method according to Claim 7, the switcher indicating in the recording database the resources which can be operated.

9. Method according to one of the preceding claims, the user interface using a 'Hyper-Text Markup Language'.

10. Method according to one of the preceding claims, the data station being connected to a network and program elements being transferred via the network.

11. Method according to one of Claims 1 to 10, a common memory ('shared memory') being used as datagram interface.

12. Method according to one of Claims 1 to 10, channels ('named pipes') which are appointed as the datagram interface being used.

13. Method according to one of Claims 1 to 10, the protocol UDP/IP being used as datagram interface.

## Revendications

1. Procédé pour faire fonctionner un appareil de traitement de données comportant les caractéristiques :
- une interface d'utilisateur comprend des moyens pour charger et exécuter des sous-programmes (13x, 13y) par activation d'éléments de l'interface utilisateur,
- un système d'exploitation met à disposition au moins un moyen (11a, 11b) d'exploitation qui n'est pas géré par l'interface utilisateur et dont l'interface (12a, 12b) prévoit une exploitation orientée liaison,
- un commutateur (10) reçoit de sous-programmes (13x, 13y) des instructions (14x, 14y) pour commander des moyens (11a, 11b) d'exploitation dont l'interface (12a, 12b) prévoit un fonctionnement orienté liaison, les instructions (14x, 14y) étant transmises par l'intermédiaire d'une interface sans liaison.

2. Procédé suivant la revendication 1, le commutateur ouvrant la liaison avec un moyen d'exploitation par l'arrivée d'une instruction relative au moyen d'exploitation.

3. Procédé suivant la revendication 1, le commutateur ouvrant la liaison avec un moyen d'exploitation immédiatement après le début du fonctionnement et avant l'arrivée d'une instruction qui s'y rapporte.

4. Procédé suivant la revendication 2 ou 3, une instruction étant prévue qui ferme la liaison avec le moyen d'exploitation qui s'y rapporte.

5. Procédé suivant la revendication 4, la fermeture étant dépendante de statistiques d'utilisation accompagnantes.

6. Procédé suivant l'une des revendications précédentes, le commutateur amenant un état pour chaque moyen d'exploitation pouvant être commandé et rendant interrogeable par l'intermédiaire de l'interface de datagramme tant l'état que les états successifs admis et les instructions admises.

7. Procédé suivant l'une des revendications précédentes, le commutateur donnant connaissance de l'interface de datagramme par l'intermédiaire d'une banque de données enregistrée.

8. Procédé suivant la revendication 7, le commutateur donnant connaissance des moyens d'exploitation pouvant être commandés dans la banque de données enregistrée.

9. Procédé suivant l'une des revendications précédentes, l'interface utilisateur utilisant un "Hyper-Text Markup Language".

10. Procédé suivant l'une des revendications précédentes, le poste de données étant raccordé à un système et des sous-programmes étant transmis par l'intermédiaire du système.

11. Procédé suivant l'une des revendications 1 à 10, une mémoire commune ("shared memory") étant utilisée comme interface de datagramme.

12. Procédé suivant l'une des revendications 1 à 10, des voies nommées ("named pipes") étant utilisées comme interface de datagramme.

13. Procédé suivant l'une des revendications 1 à 10, le protocole UDP/IP étant utilisé comme interface de datagramme.
